# EUROPEAN PATENT APPLICATION

(11) **EP 4 411 692 A1**
(43) Date of publication of application: **07.08.2024**
(21) Application number: 22875604.5
(22) Date of filing: 09.08.2022
(51) Int. Cl.: G08G 1/16, B60W 40/02, B60W 40/107, B60R 99/00, B60W 30/06

(54) **PARKING ASSISTANCE DEVICE**

(30) Priority: 30.09.2021 JP 2021162011; 30.09.2021 JP 2021162083
(71) Applicant: AISIN CORPORATION, Kariya-shi, Aichi 448-8650 (JP)
(72) Inventor: IWAZAWA, Kazuma, Tokyo 103-0022 (JP)
(74) Representative: TBK
(86) International application number: PCT/JP2022/030440
(87) International publication number: WO 2023/053729

(57) **Abstract**

A parking assistance device includes a route setting part that sets a movement route of a vehicle, and a control part that controls the vehicle by changing an acceleration depending on a distance between a starting position of the vehicle in the movement route and a stopping position of the vehicle in the movement route.

## Description

### TECHNICAL FIELD

Embodiments of the present invention relate to a parking assistance device.

### BACKGROUND ART

Conventionally, a parking assistance device that controls a vehicle to park the vehicle in a parking area is known. The parking assistance device calculates a movement route to a target position and steers the vehicle according to the movement route to guide the vehicle to the target position. In addition, a parking assistance device is known, the parking assistance device performing, when guiding a vehicle to a target position, brake control and acceleration/deceleration control in addition to steering control.

### CITATION LIST

### PATENT LITERATURE

Patent Literature 1: JP 2021-62743 A
Patent Literature 2: JP 2019-107938 A

### SUMMARY OF INVENTION

### TECHNICAL PROBLEMS

In parking assistance, it is advantageous if the control of a vehicle can be performed with high accuracy.

Therefore, one of the challenges of the embodiments of the present invention is to obtain, for example, a parking assistance device capable of improving the accuracy of controlling a vehicle.

### SOLUTIONS TO PROBLEMS

A parking assistance device of an embodiment includes: a route setting part that sets a movement route of a vehicle; and a control part that controls the vehicle by changing an acceleration depending on a distance between a starting position of the vehicle in the movement route and a stopping position of the vehicle in the movement route.

According to such a configuration, a vehicle is controlled by changing an acceleration depending on a distance between a starting position of the vehicle in the movement route and a stopping position of the vehicle in the movement route, so that the accuracy of controlling the vehicle (e.g., the control of the stopping position of the vehicle or the speed of the vehicle) can be improved as compared with a configuration in which an acceleration is not changed depending on the distance.

In the parking assistance device, the control part performs braking control of the vehicle using, for example, a plurality of decelerations set to decrease as the distance between the starting position and the stopping position decreases.

According to such a configuration, the braking control of a vehicle is performed using, for example, a plurality of decelerations set to decrease as a distance between a starting position of the vehicle in a movement route and a stopping position of the vehicle in the movement route decreases, so that a timing, at which the braking is started, is earlier as the distance decreases. Therefore, even when the distance is short, the time from the start of the braking to the stop of the vehicle can be lengthened, so that the braking control of the vehicle during that time can be performed accurately. Therefore, the stopping position accuracy can be improved.

In the parking assistance device, the plurality of decelerations are, for example, a first deceleration when the distance is equal to or greater than a threshold, and a second deceleration when the distance is less than the threshold, in which the second deceleration is smaller than the first deceleration.

According to such a configuration, the plurality of decelerations are the first deceleration and the second deceleration, and thus it is possible to suppress complication of the braking control.

In the parking assistance device, for example, when the distance is less than the threshold, the control part starts a deceleration operation at a timing earlier than when the distance is equal to or greater than the threshold.

According to such a configuration, the braking control, when the distance is less than the threshold, can be performed more accurately.

The parking assistance device includes, for example, a target speed setting part that sets a target speed between the starting position and the stopping position, and the control part: increases, when a distance between the starting position and the stopping position is less than a distance threshold, a driving force of the vehicle at a first change rate in starting the vehicle; increases, when the distance is equal to or greater than the distance threshold and the target speed is equal to or greater than a speed threshold, the driving force at a second change rate larger than the first change rate in starting the vehicle; and increases, when the distance is equal to or greater than the distance threshold and the target speed is less than the speed threshold, the driving force at the first change rate.

According to such a configuration, the control part increases the driving force at the first change rate when the distance is equal to or greater than the distance threshold and the target speed is less than the speed threshold. Therefore, it is easier to control the speed of the vehicle as compared with a configuration in which the driving force is increased at the second change rate in this case. Therefore, the speed accuracy of the vehicle can be improved.

In the parking assistance device, for example, the control part: reduces, when the distance is less than the distance threshold, a braking force of the vehicle at a third change rate in starting the vehicle; reduces, when the distance is equal to or greater than the distance threshold and the target speed is equal to or greater than the speed threshold, the braking force at a fourth change rate larger than the third change rate in starting the vehicle; and reduces, when the distance is equal to or greater than the distance threshold and the target speed is less than the speed threshold, the braking force at the third change rate.

According to such a configuration, the control part reduces the braking force at the third change rate when the distance is equal to or greater than the distance threshold and the target speed is less than the speed threshold. Therefore, it is easier to control the speed of the vehicle as compared with a configuration in which the driving force is increased at the fourth change rate in this case. Therefore, the speed accuracy of the vehicle can be improved.

### BRIEF DESCRIPTION OF DRAWINGS

FIG. 1 is an exemplary perspective view illustrating a state in which a part of a vehicle interior of a vehicle of a first embodiment is seen through.
FIG. 2 is an exemplary plan view (overhead view) of the vehicle of the first embodiment.
FIG. 3 is an exemplary block diagram of a configuration of a parking assistance system of the first embodiment.
FIG. 4 is an exemplary block diagram of a partial configuration of an ECU (parking assistance device) of the parking assistance system of the first embodiment.
FIG. 5 is a flowchart illustrating an example of a procedure of a process by the parking assistance device of the first embodiment.
FIG. 6 is an exemplary schematic plan view illustrating an initial position, a route, and a target position of a vehicle when the target position is set corresponding to a parking lot by the parking assistance device of the first embodiment.
FIG. 7 is a graph illustrating a time lapse of a speed of the vehicle when a first deceleration is used in braking control by the parking assistance device of the first embodiment.
FIG. 8 is a graph illustrating a time lapse of the speed of the vehicle when a second deceleration is used in the braking control by the parking assistance device of the first embodiment.
FIG. 9 is a flowchart illustrating an example of a procedure of a braking process by the parking assistance device of the first embodiment.
FIG. 10 is a graph for explaining a deceleration used in a parking assistance device of a first modification of the first embodiment.
FIG. 11 is an exemplary block diagram of a partial configuration of an ECU (parking assistance device) of a parking assistance system of a second embodiment.
FIG. 12 is a flowchart illustrating an example of a procedure of a process by the parking assistance device of the second embodiment.
FIG. 13 is a flowchart illustrating an example of a procedure of a starting process by the parking assistance device of the second embodiment.
FIG. 14 is a graph illustrating an example of a relationship among a driving force, a braking force, and a time lapse in the starting process by the parking assistance device of the second embodiment.
FIG. 15 is a flowchart illustrating an example of a procedure of a starting process by a parking assistance device of a first modification of the second embodiment.

### DESCRIPTION OF EMBODIMENTS

Hereinafter, exemplary embodiments of the present invention will be disclosed. The configurations of the embodiments described below, and the actions, results, and effects brought by the configurations are examples. The present invention can be realized by configurations other than those disclosed in the following embodiments, and at least one of various effects based on the basic configurations and derivative effects can be obtained.

### <First Embodiment>

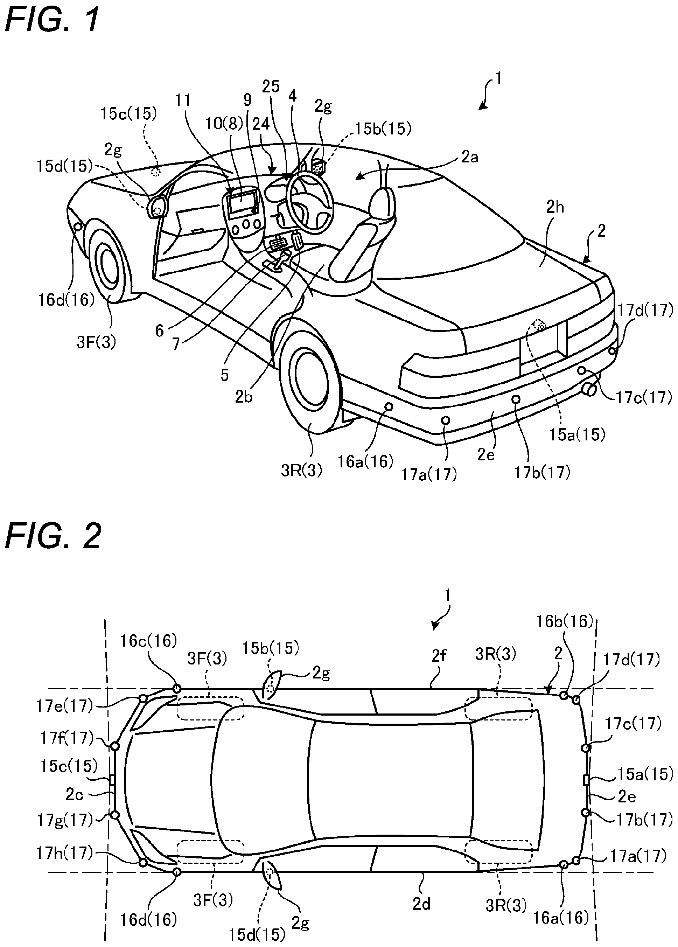

FIG. 1 is an exemplary perspective view illustrating a state in which a part of a vehicle interior of a vehicle of a first embodiment is seen through. A vehicle 1 of the present embodiment may be, for example: an automobile using a non-illustrated internal combustion engine as a drive source, that is, an internal combustion engine automobile; an automobile using a non-illustrated electric motor as a drive source, that is, an electric automobile, a fuel cell automobile, or the like; a hybrid automobile using both of them as a drive source; or an automobile including another drive source. In addition, the vehicle 1 can be equipped with various speed shift devices, and can be equipped with various devices necessary for driving the internal combustion engine or the electric motor, for example, systems and components. In addition, the types, numbers, layouts, and others of devices related to the driving of wheels 3 in the vehicle 1 can be variously set.

As illustrated in FIG. 1, a vehicle body 2 constitutes a vehicle interior 2a in which a non-illustrated occupant rides. In the vehicle interior 2a, a steering part 4, an acceleration operation part 5, a braking operation part 6, a speed shift operation part 7, and the like are provided in a state of facing a seat 2b for a driver as the occupant. The steering part 4 is, for example, a steering wheel protruding from a dashboard 24, the acceleration operation part 5 is, for example, an accelerator pedal positioned at the feet of the driver, the braking operation part 6 is, for example, a brake pedal positioned at the feet of the driver, and the speed shift operation part 7 is, for example, a shift lever protruding from a center console. Note that the steering part 4, the acceleration operation part 5, the braking operation part 6, the speed shift operation part 7, and the like are not limited thereto.

In the vehicle interior 2a, a display device 8 as a display output part and a sound output device 9 as a sound output part are also provided. The display device 8 is, for example, an LCD (liquid crystal display), or an OELD (organic electroluminescent display). The sound output device 9 is, for example, a speaker. In addition, the display device 8 is covered with a transparent operation input part 10 such as a touch panel. The occupant can visually recognize an image displayed on a display screen of the display device 8 via the operation input part 10. In addition, the occupant can execute an operation input by touching, pushing, or moving the operation input part 10 with a finger or the like at a position corresponding to an image displayed on the display screen of the display device 8. The display device 8, the sound output device 9, the operation input part 10, and the like are provided, for example, in a monitor device 11 positioned at the center, in the vehicle width direction, that is, in the left-right direction, of the dashboard 24. The monitor device 11 can include a non-illustrated operation input part such as a switch, a dial, a joystick, or a push button. In addition, a non-illustrated sound output device can be provided at another position in the vehicle interior 2a different from the monitor device 11, and sound can be output from the sound output device 9 of the monitor device 11 and the another sound output device. Note that the monitor device 11 can also be used as, for example, a navigation system or an audio system.

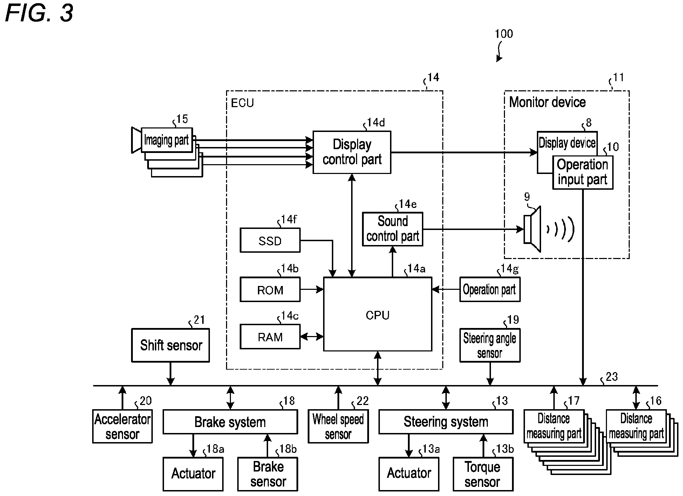

FIG. 2 is an exemplary plan view (overhead view) of the vehicle of the first embodiment. As illustrated in FIGS. 1 and 2, the vehicle 1 is, for example, a four-wheeled automobile, and includes two left and right front wheels 3F and two left and right rear wheels 3R. All of these four wheels 3 can be configured to be able to turn. As illustrated in FIG. 3, the vehicle 1 includes a steering system 13 that steers at least two wheels 3. The steering system 13 includes an actuator 13a and a torque sensor 13b. The steering system 13 is electrically controlled by an ECU 14 (electronic control unit) or the like to operate the actuator 13a. The steering system 13 is, for example, an electric power steering system or a SBW (steer by wire) system. The steering system 13 causes the actuator 13a to apply torque, that is, assist torque, to the steering part 4 in order to supplement steering force, and causes the actuator 13a to turn the wheel 3. In this case, the actuator 13a may turn one wheel 3 or may turn a plurality of the wheels 3. In addition, the torque sensor 13b detects, for example, the torque applied to the steering part 4 by the driver.

In addition, the vehicle body 2 is provided with, for example, four imaging parts 15a to 15d as a plurality of imaging parts 15, as illustrated in FIG. 2. The imaging part 15 is, for example, a digital camera incorporating an imaging element such as a CCD (charge coupled device) or a CIS (CMOS image sensor). The imaging part 15 can output moving picture data at a predetermined frame rate. Each of the imaging parts 15 includes a wide-angle lens or a fisheye lens, and can image a range of, for example, 140° to 190° in the horizontal direction. In addition, the optical axis of the imaging part 15 is set to face obliquely downward. Therefore, the imaging part 15 sequentially images an external environment around the vehicle body 2 including a road surface on which the vehicle 1 can move and an area where the vehicle 1 can be parked, and outputs the imaged environment as captured image data.

The imaging part 15a is positioned, for example, at an end 2e on the rear side of the vehicle body 2, and is provided in a wall portion below a door 2h of a rear trunk. The imaging part 15b is positioned, for example, at an end 2f on the right side of the vehicle body 2, and is provided on a door mirror 2g on the right side. The imaging part 15c is positioned, for example, at an end 2c on the front side of the vehicle body 2, that is, on the front side in the vehicle front-rear direction, and is provided on a front bumper or the like. The imaging part 15d is positioned, for example, at an end 2d on the left side of the vehicle body 2, that is, on the left side in the vehicle width direction, and is provided on the door mirror 2g as a protruding portion on the left side. The ECU 14 executes arithmetic processing and image processing on the basis of the image data obtained by the plurality of imaging parts 15, whereby an image with a wider viewing angle can be generated, or a virtual overhead image of the vehicle 1 viewed from above can be generated. Note that an overhead image can also be referred to as a planar image.

In addition, the ECU 14 identifies, from the image by the imaging part 15, a dividing line or the like marked on the road surface around the vehicle 1, and detects (extracts) a parking lot indicated by the dividing line or the like.

In addition, the vehicle body 2 is provided with, for example, four distance measuring parts 16a to 16d and eight distance measuring parts 17a to 17h as a plurality of distance measuring parts 16 and 17, as illustrated in FIGS. 1 and 2. The distance measuring parts 16 and 17 are, for example, sonars that emit ultrasonic waves and capture reflected waves thereof. The sonar may also be referred to as a sonar sensor or an ultrasonic detector. Based on the detection results of the distance measuring parts 16 and 17, the ECU 14 can determine the presence or absence of an object, such as an obstacle, located around the vehicle 1, and measure the distance to the object. That is, the distance measuring parts 16 and 17 are examples of a detection part that detects an object. Note that the distance measuring part 17 can be used, for example, to detect an object at a relatively short distance, and the distance measuring part 16 can be used, for example, to detect an object at a relatively long distance farther than the distance measuring part 17. In addition, the distance measuring part 17 can be used, for example, to detect an object in front of and behind the vehicle 1, and the distance measuring part 16 can be used to detect an object on the side of the vehicle 1. In addition, the distance measuring parts 16 and 17 may be radar devices or the like.

FIG. 3 is an exemplary block diagram of a configuration of a parking assistance system of the first embodiment. In a parking assistance system 100, the ECU 14, the monitor device 11, the steering system 13, and the distance measuring parts 16 and 17, and a brake system 18, a steering angle sensor 19, an accelerator sensor 20, a shift sensor 21, a wheel speed sensor 22, and the like are electrically connected via an in-vehicle network 23 as an electric communication line, as illustrated in FIG. 3. The in-vehicle network 23 is configured as, for example, a CAN (controller area network). The ECU 14 can control the steering system 13, the brake system 18, and the like by sending control signals through the in-vehicle network 23. In addition, the ECU 14 can receive via the in-vehicle network 23: detection results of the torque sensor 13b, the brake sensor 18b, the steering angle sensor 19, the distance measuring part 16, the distance measuring part 17, the accelerator sensor 20, the shift sensor 21, the wheel speed sensor 22, and the like; and operation signals and the like from the operation input part 10 and the like.

The ECU 14 includes, for example, a CPU 14a (central processing unit), a ROM 14b (read only memory), a RAM 14c (random access memory), a display control part 14d, a sound control part 14e, and an SSD 14f (solid state drive, flash memory). The CPU 14a can execute various arithmetic processing and control such as image processing related to an image displayed on the display device 8, determination of a target position of the vehicle 1, calculation of a movement route of the vehicle 1, determination of the presence or absence of interference with an object, automatic control of the vehicle 1, and cancellation of the automatic control. The CPU 14a can read a program installed and stored in a nonvolatile storage device such as the ROM 14b and execute arithmetic processing according to the program. The RAM 14c temporarily stores various data to be used in the calculation in the CPU 14a. In addition, the display control part 14d mainly executes, among the arithmetic processing in the ECU 14, image processing using the image data obtained by the imaging part 15, synthesis of the image data displayed on the display device 8, and the like. In addition, the sound control part 14e mainly executes, among the arithmetic processing in the ECU 14, processing of sound data output from the sound output device 9. In addition, the SSD 14f is a rewritable nonvolatile storage part, and can store data even when the ECU 14 is powered off Note that the CPU 14a, the ROM 14b, the RAM 14c, and the like can be integrated in the same package. In addition, the ECU 14 may have a configuration in which: instead of the CPU 14a, another logical operation processor such as a DSP (digital signal processor); a logic circuit; or the like is used. In addition, a HDD (hard disk drive) may be provided instead of the SSD 14f, and the SSD 14f and the HDD may be provided separately from the ECU 14. The ECU 14 is an example of the parking assistance device.

The brake system 18 is, for example, an ABS (anti-lock brake system) that suppresses locking of a brake, an anti-skid device (ESC; electronic stability control) that suppresses skidding of the vehicle 1 at the time of cornering, an electric brake system that enhances braking force (executes brake assist), or BBW (brake by wire). The brake system 18 applies a braking force to the wheel 3 and eventually to the vehicle 1 via an actuator 18a. In addition, the brake system 18 can execute various control by detecting locking of the brake, idle rotation of the wheel 3, a sign of skidding, or the like from a rotation difference between the left and right wheels 3, or the like. The brake sensor 18b is a sensor that detects, for example, the position of a movable part of the braking operation part 6. The brake sensor 18b can detect the position of the brake pedal as the movable part. The brake sensor 18b includes a displacement sensor.

The steering angle sensor 19 is a sensor that detects, for example, a steering amount of the steering part 4 such as the steering wheel. The steering angle sensor 19 is configured using, for example, a Hall element. The ECU 14 acquires the steering amount of the steering part 4 by the driver, the steering amount of each wheel 3 at the time of automatic steering, and the like from the steering angle sensor 19 to execute various control. Note that the steering angle sensor 19 detects a rotation angle of a rotating part included in the steering part 4. The steering angle sensor 19 is an example of an angle sensor.

The accelerator sensor 20 is a sensor that detects, for example, the position of a movable part of the acceleration operation part 5. The accelerator sensor 20 can detect the position of the accelerator pedal as the movable part. The accelerator sensor 20 includes a displacement sensor.

The shift sensor 21 is a sensor that detects, for example, the position of a movable part of the speed shift operation part 7. The shift sensor 21 can detect the position of a lever, an arm, a button, or the like as the movable part. The shift sensor 21 may include a displacement sensor or may be configured as a switch.

The wheel speed sensor 22 is a sensor that detects the rotation amount of the wheel 3 and the number of rotations per unit time. The wheel speed sensor 22 outputs the number of wheel speed pulses indicating the detected number of rotations as a sensor value. The wheel speed sensor 22 can be configured using, for example, a Hall element. Based on the sensor value acquired from the wheel speed sensor 22, the ECU 14 calculates a movement amount or the like of the vehicle 1 and executes various control. Note that the wheel speed sensor 22 may be provided in the brake system 18. In this case, the ECU 14 acquires a detection result of the wheel speed sensor 22 via the brake system 18.

Note that the configurations, arrangements, electrical connection forms, and the like of the various sensors and actuators described above are merely examples, and can be variously set (changed).

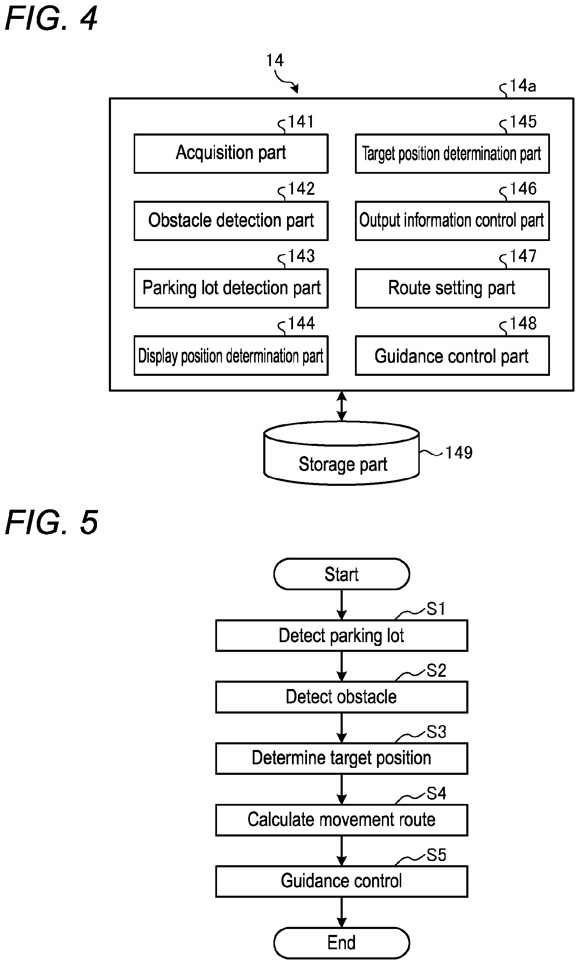

FIG. 4 is an exemplary block diagram of a partial configuration of the ECU (parking assistance device) of the parking assistance system of the first embodiment. As illustrated in FIG. 4, the ECU 14 includes an acquisition part 141, an obstacle detection part 142, a parking lot detection part 143, a display position determination part 144, a target position determination part 145, an output information control part 146, a route setting part 147, a guidance control part 148, a storage part 149, and the like. The CPU 14a executes a process according to the program to function as the acquisition part 141, the obstacle detection part 142, the parking lot detection part 143, the display position determination part 144, the target position determination part 145, the output information control part 146, the route setting part 147, the guidance control part 148, or the like. In addition, the storage part 149 stores data to be used in arithmetic processing in each part, data as the results of the arithmetic processing, and the like. Note that at least a part of the functions of the respective parts may be realized by hardware.

The acquisition part 141 acquires various data, signals, and the like. The acquisition part 141 acquires, for example, data and signals, such as detection results of each sensor, operation inputs, instruction inputs, and image data. The acquisition part 141 can acquire a signal by an operation input in an operation part 14g. The operation part 14g is, for example, a push button or a switch.

The obstacle detection part 142 detects an obstacle that hinders the traveling of the vehicle 1. The obstacle is, for example, another vehicle, a wall, a pillar, a fence, a protrusion, a step, a wheel stopper, or an object. The obstacle detection part 142 can detect the presence or absence, height, size, and the like of the obstacle by various methods. The obstacle detection part 142 can detect the obstacle, for example, on the basis of detection results of the distance measuring parts 16 and 17. Alternatively, the obstacle detection part 142 may detect the height of the obstacle on the basis of the detection results of the distance measuring parts 16 and 17 and the height of each beam. The obstacle detection part 142 may detect the presence or absence or the height of the obstacle on the basis of a detection result of the wheel speed sensor 22 or a non-illustrated acceleration sensor and detection results of the distance measuring parts 16 and 17. In addition, the obstacle detection part 142 may detect the height of the obstacle by, for example, image processing based on the image captured by the imaging part 15.

The parking lot detection part 143 detects a parking lot provided as a mark or an object. The parking lot is a guide or reference lot set to park the vehicle 1 at the place. In addition, a parking boundary (boundary) is a boundary or outer edge of the parking lot, and is, for example, a dividing line, a frame line, a straight line, a band, a step, or an edge thereof. That is, the parking boundary is a mark, an object, or the like. The parking lot detection part 143 can detect the parking lot and the parking boundary by, for example, image processing based on the image captured by the imaging part 15. The parking lot detection part 143 is an example of a boundary detection part.

Based on, for example, at least one of a detection result by the obstacle detection part 142 and a detection result of the parking lot detection part 143, the display position determination part 144 determines a display position of a display element as a guide or target to guide the vehicle 1. The display position may correspond to the end point of the movement route, or may correspond to the middle of the movement route. The display element can be set as, for example, a point, a line, a frame, or a region displayed on the display device 8.

Based on, for example, at least one of a detection result by the obstacle detection part 142 and a detection result of the parking lot detection part 143, the target position determination part 145 determines a target position as a guide or target position to guide the vehicle 1. The target position may correspond to the end point of the movement route, or may correspond to the middle of the movement route. The target position can be set as, for example, a point, a line, a frame, or a region. The target position may be the same as the display position.

The output information control part 146 controls the display control part 14d and the sound control part 14e, and eventually the display device 8 and the sound output device 9 such that the display device 8 and the sound output device 9 output expected information in an expected manner at each stage of, for example, the start and end of parking assistance, the determination of the target position, the route calculation, and the guidance control.

Based on, for example, the current position of the vehicle 1, that is, one's own vehicle, the determined target position, and the detection result of the obstacle, the route setting part 147 sets the movement route from the current position of the vehicle 1 to the target position by a known method or the like. In addition, the route setting part 147 can update (correct) the movement route including the target position when the guidance control part 148 guides the vehicle 1. That is, the guidance control part 148 updates the movement route on the basis of detection objects (obstacles and parking lot lines) detected regularly. That is, the route setting part 147 performs feedback control. The route setting part 147 can determine the target position by a method similar to that in the target position determination part 145.

The guidance control part 148 controls each part such that the movement of the vehicle 1 along the calculated movement route is realized. That is, the guidance control part 148 guides the vehicle 1. In the vehicle 1 that moves, for example, due to creep without operating the accelerator pedal, the guidance control part 148 can move the vehicle 1 along the movement route by controlling the steering system 13 according to the position of the vehicle 1. In addition, the guidance control part 148 can control not only the steering system 13 but also a driving mechanism such as an engine or a motor, the brake system 18 as a braking mechanism, and the like. In addition, the guidance control part 148 may control, for example, the output information control part 146, the display control part 14d, the sound control part 14e, and eventually the display device 8 and the sound output device 9 to guide the driver about the movement of the vehicle 1 along the movement route by a display output or a sound output according to the position of the vehicle 1. The guidance control part 148 sets a target speed, an acceleration, or a deceleration (negative acceleration), and controls the vehicle 1 such that the vehicle moves at the set target speed, acceleration, or deceleration. At this time, when the route setting part 147 updates the movement route, the guidance control part 148 moves the vehicle 1 such that the vehicle moves to the updated movement route. In this case, various target values (target speed, target acceleration, target deceleration) that the guidance control part 148 sets are also updated.

The storage part 149 stores data that is used in calculation in the ECU 14 or calculated by the calculation in the ECU 14.

FIG. 5 is a flowchart illustrating an example of a procedure of a process by the parking assistance device of the first embodiment. In the parking assistance system 100, the process is executed according to the procedure illustrated in FIG. 5. First, the parking lot detection part 143 detects the parking lot and the parking boundary (S1), and the obstacle detection part 142 detects the obstacle (S2). Next, the target position determination part 145 determines the target position, in the movement route, of the vehicle 1 on the basis of the detection results in S1 and S2 (S3). Next, the route setting part 147 calculates the movement route from the current position of the vehicle 1 to the determined target position (S4). Next, the guidance control part 148 controls each part such that the movement of the vehicle 1 along the calculated movement route is realized (S5). Note that the target position, the movement route, and the like can be appropriately corrected or updated while the vehicle 1 is moving along the movement route.

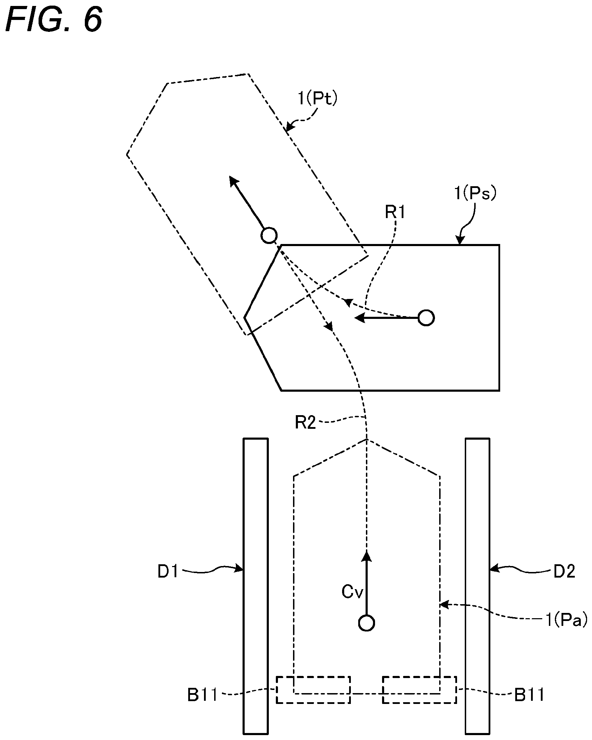

FIG. 6 is an exemplary schematic plan view illustrating the initial position, route, and target position of a vehicle when the target position is set corresponding to the parking lot by the parking assistance device of the first embodiment. FIG. 6 illustrates an example in which the vehicle 1 positioned at an initial position Ps moves to a target position Pa by moving along routes R1 and R2 turning around at a return position Pt. The target position Pa and the routes R1 and R2 are set based on detection results of parking boundaries D1 and D2, obstacle B11, other non-illustrated obstacles, and the like at the initial position Ps. Specifically, the detected positions of the parking boundaries D1 and D2, the obstacle B11, and the like are converted, for example, in the ECU 14, into positions on coordinates in plan view from above the vehicle 1, as illustrated in FIG. 6, by, for example, calibration or coordinate conversion based on geometric calculation, and the target position Pa, the routes R1 and R2, and the like are calculated on the coordinates. In the example of FIG. 6, the target position Pa is set between the parking boundaries D1 and D2 of the detected parking lot. In the route R1, the initial position Ps is the starting position of the vehicle 1, and the return position Pt is the stopping position of the vehicle 1. In the route R2, the return position Pt is the starting position of the vehicle 1, and the target position Pa is the stopping position of the vehicle 1.

In addition, while the vehicle 1 is moving along the routes R1 and R2 after the target position determination part 145 determines the target position Pa, the route setting part 147 can update the initial target position Pa on the basis of the detection results of the obstacle detection part 142, the parking lot detection part 143, and the like during the movement. As the distance from the vehicle 1 is shorter, the detection accuracy of the parking boundaries D1 and D2 and the obstacle B11 may be higher. Therefore, according to the present embodiment, the target position may be corrected more accurately.

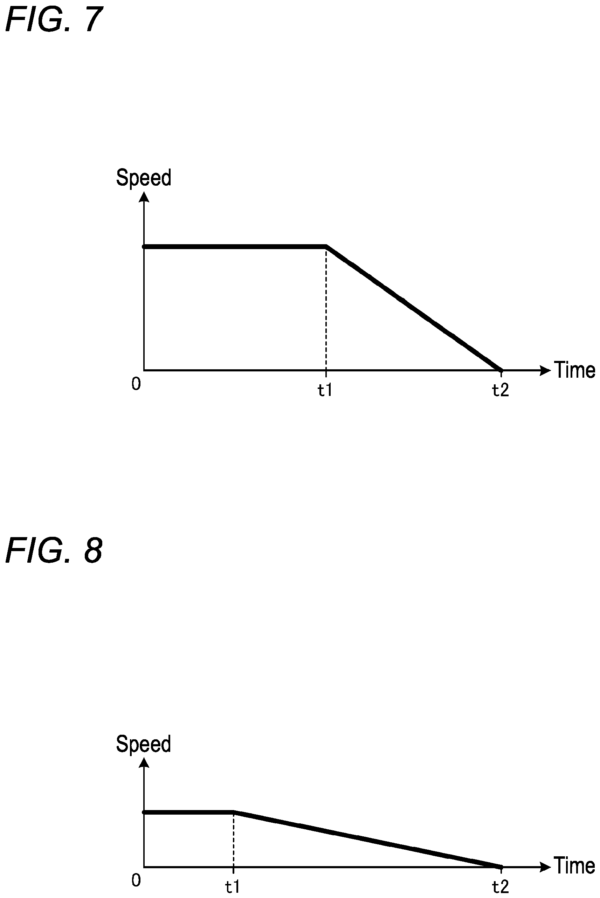

FIG. 7 is a graph illustrating a time lapse of the speed of the vehicle when a first deceleration is used in the braking control by the parking assistance device of the first embodiment. FIG. 8 is a graph illustrating a time lapse of the speed of the vehicle when a second deceleration is used in the braking control by the parking assistance device of the first embodiment.

In addition, the guidance control part 148 performs the braking control of the vehicle 1 using a plurality of decelerations set to decrease as moving distances, which are the distances between the starting positions (initial position Ps, return position Pt) of the vehicle 1 in the routes R1 and R2 and the stopping positions (return position Pt, target position Pa) of the vehicle 1 in the routes R1 and R2, decrease. At this time, the guidance control part 148 controls the brake system 18. The plurality of decelerations are a first deceleration when the moving distance is equal to or greater than a threshold and a second deceleration when the moving distance is less than the threshold. The second deceleration is smaller than the first deceleration. In other words, the plurality of decelerations are set to decrease stepwise as the moving distance decreases. In FIGS. 7 and 8, a time t1 is a starting point in time of a deceleration operation, and a time t2 is a parking point in time of the vehicle 1. The time t1 is obtained from the deceleration (first deceleration, second deceleration) to be used and the time t2 (stopping position). As can be seen from FIGS. 7 and 8, the time 11, when the second deceleration is used, is earlier than the time t1 when the first deceleration is used. That is, when the moving distance is less than the threshold, a timing, at which a deceleration operation is started, is earlier than when the moving distance is equal to or greater than the threshold.

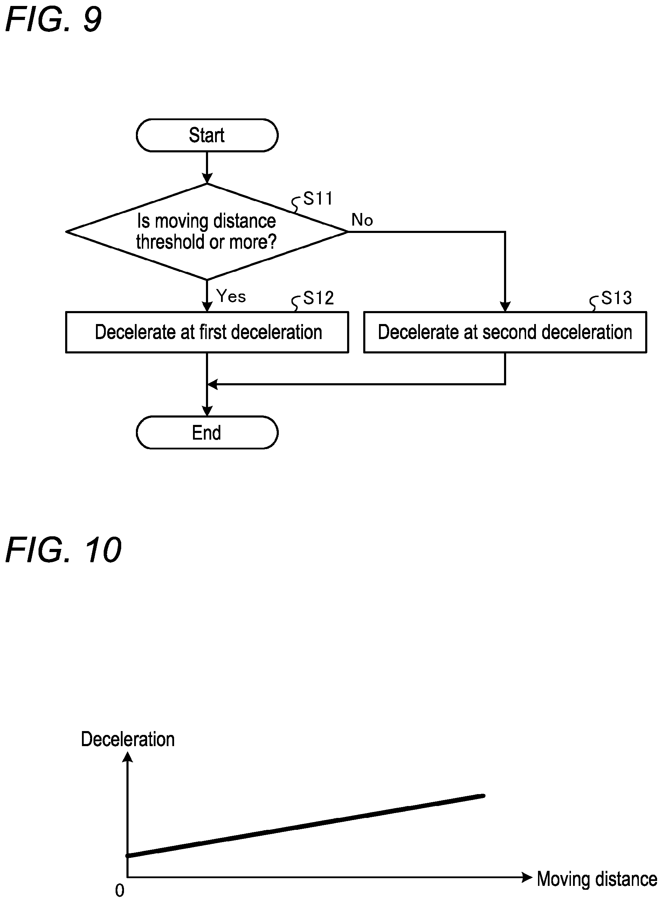

FIG. 9 is a flowchart illustrating an example of a procedure of a braking process by the parking assistance device of the first embodiment. In the parking assistance system 100, the braking process is executed according to the procedure illustrated in FIG. 9. First, the guidance control part 148 determines whether the moving distance is equal to or greater than the threshold (S11). When the moving distance is equal to or greater than the threshold (S11: Yes), the guidance control part 148 uses the first deceleration as the deceleration, and decelerates the vehicle 1 at the first deceleration (S12). When the moving distance is not equal to or greater than the threshold, that is, when the moving distance is less than the threshold (S11: No), the guidance control part 148 uses the second deceleration as the deceleration, and decelerates the vehicle 1 at the second deceleration (S13).

In the present embodiment, the ECU 14 (parking assistance device) includes the route setting part 147 and the guidance control part 148 (control part), as described above. The route setting part 147 sets the routes R1 and R2 (movement routes) of the vehicle 1. The guidance control part 148 controls the vehicle 1 by changing an acceleration depending on the distances between the starting positions (initial position Ps, return position Pt) of the vehicle 1 in the routes R1 and R2 and the stopping positions (return position Pt, target position Pa) of the vehicle 1 in the routes R1 and R2.

According to such a configuration, the control of the vehicle 1 is performed by changing an acceleration depending on the distance between the starting position of the vehicle 1 in the movement route and the stopping position of the vehicle 1 in the movement route, so that the accuracy of controlling the vehicle (e.g., control of the stopping position of the vehicle or the speed of the vehicle) can be improved as compared with a configuration in which an acceleration is not changed depending on the distance.

Here, it is advantageous if it is possible to accurately stop at the stopping position included in the movement route. In the present embodiment, the guidance control part 148 performs the braking control of the vehicle 1 using a plurality of decelerations set to decrease as the distances, between the starting positions (initial position Ps, return position Pt) of the vehicle 1 in the routes R1 and R2 and the stopping positions (return position Pt, target position Pa) of the vehicle 1 in the routes R1 and R2, decrease.

According to such a configuration, the braking control of the vehicle 1 is performed using, for example, a plurality of decelerations set to decrease as moving distances, which are the distances between the starting positions of the vehicle 1 in the routes R1 and R2 and the stopping positions of the vehicle 1 in the routes R1 and R2, decrease, and thus a timing, at which the braking is started, is earlier as the moving distances decrease. Therefore, as compared with a case where the first deceleration is used in all the braking control, a time from the start of the braking to the stop of the vehicle 1 can be increased even when the moving distance is short, so that the braking control of the vehicle 1 during that time can be performed accurately. Therefore, the stopping position accuracy can be improved. For example, the number of corrections in the feedback control described above can be increased, so that the stopping position accuracy can be improved.

In addition, the plurality of decelerations are the first deceleration when the distance is equal to or greater than the threshold and the second deceleration when the moving distance is less than the threshold, in which the second deceleration is smaller than the first deceleration.

According to such a configuration, the plurality of decelerations are the first deceleration and the second deceleration, and thus it is possible to suppress complication of the braking control, as compared with a configuration in which three or more decelerations are set as the plurality of decelerations.

In addition, when the distance is less than the threshold, the guidance control part 148 starts a deceleration operation at a timing earlier than when the distance is equal to or greater than the threshold.

According to such a configuration, the braking control, when the distance is less than the threshold, can be performed more accurately.

Note that the plurality of decelerations are not limited to the first deceleration and the second deceleration. FIG. 10 is a graph for explaining a deceleration used in a parking assistance device of a first modification of the first embodiment. The plurality of decelerations may be set to increase linearly as the moving distance increases, as illustrated in FIG. 10.

### <Second Embodiment>

Next, a second embodiment will be described. The same components as those in the first embodiment will be denoted by common reference signs, and redundant description will be omitted.

In the parking assistance, when a moving distance, which is the distance between a starting position and a stopping position included in the movement route, is relatively long, the driving force of the vehicle 1 may be increased at a relatively large change rate to quickly start the vehicle 1; and when the moving distance is relatively short, the driving force of the vehicle 1 may be increased at a relatively small change rate to slowly start the vehicle. However, when the target speed of the vehicle 1 is relatively low in a case where the moving distance is relatively long, there is a risk that the actual speed of the vehicle 1 may exceed the target speed immediately after the vehicle 1 is started. Therefore, the following configuration is adopted in the present embodiment in order to improve the speed accuracy of the vehicle 1.

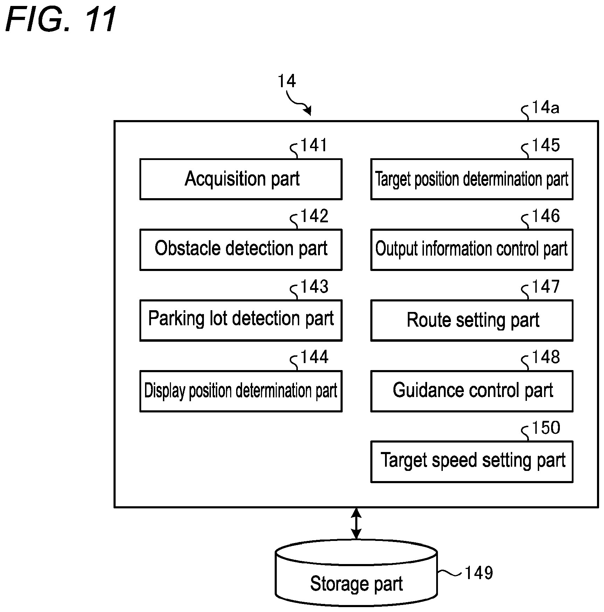

FIG. 11 is an exemplary block diagram of a partial configuration of an ECU (parking assistance device) of a parking assistance system of a second embodiment. In the present embodiment, the ECU 14 includes a target speed setting part 150 in addition to the acquisition part 141, the obstacle detection part 142, the parking lot detection part 143, the display position determination part 144, the target position determination part 145, the output information control part 146, the route setting part 147, the guidance control part 148, and the storage part 149, as illustrated in FIG. 11. The CPU 14a executes a process according to the program to function as the acquisition part 141, the obstacle detection part 142, the parking lot detection part 143, the display position determination part 144, the target position determination part 145, the output information control part 146, the route setting part 147, the guidance control part 148, or the like. In addition, the storage part 149 stores data to be used in arithmetic processing in each part, data as the results of the arithmetic processing, and the like. Note that at least a part of the functions of the respective parts may be realized by hardware.

The target speed setting part 150 sets the target speed of the vehicle 1 in the movement route set by the route setting part 147. The target speed is, for example, the maximum speed in each section between the starting position and stopping position of the vehicle 1 in the movement route. The target speed is different between when the vehicle 1 moves forward and when the vehicle 1 moves backward. For example, the target speed is higher when the vehicle 1 moves forward than when the vehicle 1 moves backward. In addition, the target speed may be different depending on a moving distance that is the distance between the starting position and stopping position of the vehicle 1 in the movement route. In addition, the target speed may be different depending on the shape (straight line, curved line) of the route of the each section, or the like. The target speed is a vehicle speed within a range in which the driver does not feel uneasy or uncomfortable when automatic traveling (parking assistance) of the vehicle 1 is executed and the automatic traveling can be reasonably executed.

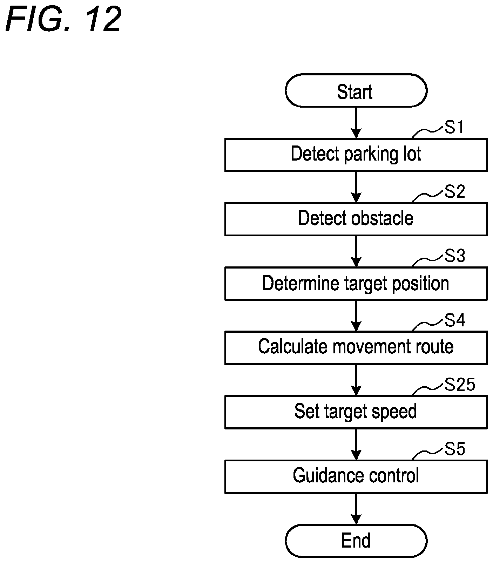

FIG. 12 is a flowchart illustrating an example of a procedure of a process by the parking assistance device of the second embodiment. In the parking assistance system 100, the process is executed according to the procedure illustrated in FIG. 12. First, the parking lot detection part 143 detects the parking lot and the parking boundary (S1), and the obstacle detection part 142 detects the obstacle (S2). Next, the target position determination part 145 determines the target position, in the movement route, of the vehicle 1 on the basis of the detection results in S1 and S2 (S3). Next, the route setting part 147 calculates the movement route from the current position of the vehicle 1 to the determined target position (S4). Next, the target speed setting part 150 sets the target speed and the like (S25). Next, the guidance control part 148 controls each part such that the movement of the vehicle 1 along the calculated movement route is realized (S5). At this time, the guidance control part 148 controls the driving force and braking force of the vehicle 1 such that a parameter related to the movement of the vehicle 1 becomes the set target value (e.g., target speed). Note that the target position, the movement route, and the like can be appropriately corrected or updated while the vehicle 1 is moving along the movement route.

The guidance control part 148 controls the driving force and braking force of the vehicle 1 such that the movement of the vehicle 1 is realized in which the actual speed (actual speed) of the vehicle 1 becomes the target speed set for each of the routes R1 and R2 (FIG. 6). The driving force is a force to move (propulsive force) to be applied to the wheel 3. That is, the driving force is a force to move ((propulsive force) to be applied to the vehicle 1. The guidance control part 148 can control the driving force by controlling the output of a driving mechanism such as an engine or a motor. In addition, the braking force is a force to stop the wheel 3 and a force to maintain the stopping. That is, the braking force is a force to stop the vehicle 1 and a force to maintain the stopping. The guidance control part 148 can control the braking force by controlling the braking mechanism (brake system 18).

In addition, the guidance control part 148 variably controls the driving force and the braking force in the starting process of the vehicle 1. For example, when a moving distance, which is the distance between the starting position and the stopping position, is less than a distance threshold, the guidance control part 148 increases the driving force of the vehicle 1 at a first change rate in starting the vehicle 1. In addition, when the moving distance is equal to or greater than the distance threshold and the target speed is equal to or greater than a speed threshold, the guidance control part 148 increases the driving force at a second change rate larger than the first change rate in starting the vehicle 1. In addition, when the moving distance is equal to or greater than the distance threshold and the target speed is less than the speed threshold, the guidance control part 148 increases the driving force at the first change rate. The first change rate, the second change rate, the distance threshold, and the speed threshold are set in advance. The first change rate and the second change rate are rates of change in the driving force per unit time. In another way of describing the above control, the guidance control part 148 sets, in starting the vehicle 1, the acceleration of the vehicle 1 to a first acceleration when the moving distance is less than the distance threshold. In addition, when the moving distance is equal to or greater than the distance threshold and the target speed is equal to or greater than the speed threshold, the guidance control part 148 sets the acceleration of the vehicle 1 to a second acceleration larger than the first acceleration. In addition, when the moving distance is equal to or greater than the distance threshold and the target speed is less than the speed threshold, the guidance control part 148 sets the acceleration of the vehicle 1 to the first acceleration.

In addition, when the moving distance is less than the distance threshold, the guidance control part 148 reduces the braking force of the vehicle 1 at a third change rate in starting the vehicle 1. When the moving distance is equal to or greater than the distance threshold and the target speed is equal to or greater than the speed threshold, the guidance control part 148 reduces the braking force at a fourth change rate larger than the third change rate in starting the vehicle 1. When the moving distance is equal to or greater than the distance threshold and the target speed is less than the speed threshold, the guidance control part 148 reduces the braking force at the third change rate. The third change rate and the fourth change rate are set in advance. The third change rate and the fourth change rate are rates of change in the braking force per unit time.

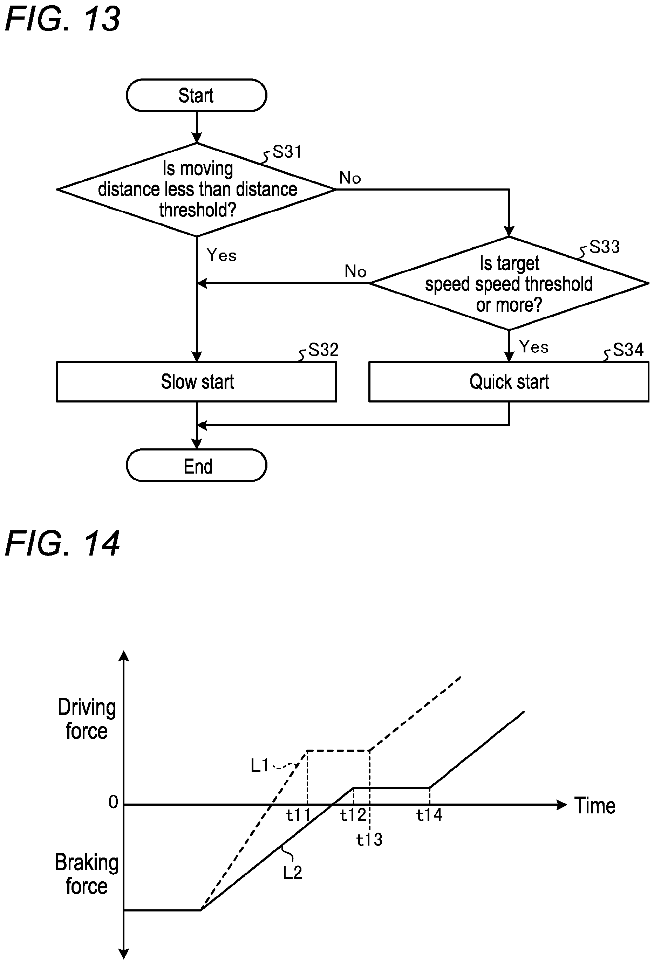

FIG. 13 is a flowchart illustrating an example of a procedure of a starting process by the parking assistance device of the second embodiment. FIG. 14 is a graph illustrating an example of a relationship among the driving force, the braking force, and a time lapse in the starting process by the parking assistance device of the second embodiment.

In the parking assistance system 100, the starting process is executed according to the procedure illustrated in FIG. 13. First, the guidance control part 148 determines whether the moving distance is less than the distance threshold (S31). When the moving distance is less than the distance threshold (S31: Yes), the guidance control part 148 slowly starts the vehicle 1 regardless of the target speed (S32). Specifically, the guidance control part 148 reduces the braking force of the vehicle 1 at the third change rate, and subsequently increases the driving force of the vehicle 1 at the first change rate.

In addition, when the moving distance is not less than the distance threshold, that is, when the moving distance is equal to or greater than the distance threshold (S31: No), the guidance control part 148 determines whether the target speed is equal to or greater than the speed threshold (S33). When the target speed is not equal to or greater than the speed threshold (S33: No), the process proceeds to S32, in which the guidance control part 148 slowly starts the vehicle 1. That is, when the moving distance is equal to or greater than the distance threshold (S31: No) and the target speed is less than the speed threshold (S33: No), the process proceeds to S32, in which the guidance control part 148 reduces the braking force of the vehicle 1 at the third change rate, and subsequently increases the driving force of the vehicle 1 at the first change rate.

In addition, when the moving distance is equal to or greater than the distance threshold (S31: No) and the target speed is equal to or greater than the speed threshold (S33: Yes), the guidance control part 148 quickly starts the vehicle 1 (S34). Specifically, the guidance control part 148 reduces the braking force at the fourth change rate, and subsequently increases the driving force at the second change rate.

A relationship among the driving force, the braking force, and a time lapse in the above starting process is, for example, as illustrated in FIG. 14. In FIG. 14, a line L1 indicates a case where the vehicle 1 is quickly started, and a line L2 indicates a case where the vehicle 1 is slowly started. In FIG. 14, the driving force indicated in the upper half of the vertical axis increases as it heads toward the upper side, and the braking force indicated in the lower half of the vertical axis increases as it heads toward the lower side. That is, the braking force decreases as it heads toward the upper side. The gradient of the line L1 is larger than that of the line L2.

A time 111 is a time point at which the acceleration reaches a first acceleration threshold in the case of the quick start. A time t13 is a time point at which, in the case of the quick start, the vehicle 1 travels a first distance from the time 111 at which the actual acceleration of the vehicle 1 reaches the first acceleration threshold. At the time t11, the guidance control part 148 determines that the vehicle 1 may have been started, and keeps the driving force constant. At the time t13, the guidance control part 148 determines that the vehicle 1 has been reliably started, and increases the driving force.

A time t12 is a time point at which, in the case of the slow start, the acceleration reaches a second acceleration threshold smaller than the first acceleration threshold. A time t14 is a time point at which, in the case of the slow start, the vehicle 1 travels the first distance from the time t12 at which the acceleration reaches the second acceleration threshold. At the time t12, the guidance control part 148 determines that the vehicle 1 may have been started, and keeps the driving force. At the time t14, the guidance control part 148 determines that the vehicle 1 has been reliably started, and then increases the driving force. The acceleration of the vehicle 1 in the case of the quick start is larger than the acceleration of the vehicle 1 in the case of the slow start. The slow start is also referred to as careful start.

The reason why the vehicle 1 is quickly started as described above is because the start timing of the vehicle 1 is made earlier. In addition, the reason why the vehicle 1 is slowly started is because a jump-out feeling (sudden acceleration feeling) accompanying sudden acceleration of the vehicle 1 is further suppressed. In other words, when the start timing is prioritized between the start timing of the vehicle 1 and the suppression of the jump-out feeling of the vehicle 1, the vehicle 1 is quickly started. When the suppression of the jump-out feeling of the vehicle 1 is prioritized between the start timing of the vehicle 1 and the suppression of the jump-out feeling of the vehicle 1, the vehicle 1 is slowly started.

In the present embodiment, the ECU 14 (parking assistance device) includes the route setting part 147, the target speed setting part 150, and the guidance control part 148 (control part), as described above. The route setting part 147 sets the routes R1 and R2 (movement routes) of the vehicle 1. The target speed setting part sets target speeds between the starting positions (initial position Ps, return position Pt) of the vehicle 1 in the routes R1 and R2 and the stopping positions (return position Pt, target position Pa) of the vehicle 1 in the routes R1 and R2. The guidance control part 148 controls the vehicle 1. When a moving distance, which is the distance between the starting position and the stopping position, is less than the distance threshold, the guidance control part 148 increases the driving force of the vehicle 1 at the first change rate in starting the vehicle 1. When the moving distance is equal to or greater than the distance threshold and the target speed is equal to or greater than the speed threshold, the guidance control part 148 increases the driving force at the second change rate larger than the first change rate in starting the vehicle 1. When the moving distance is equal to or greater than the distance threshold and the target speed is less than the speed threshold, the guidance control part 148 increases the driving force at the first change rate.

According to such a configuration, the guidance control part 148 increases the driving force at the first change rate when the moving distance between the starting position and the stopping position is equal to or greater than the distance threshold and the target speed is less than the speed threshold. Therefore, it is easier to control the speed of the vehicle 1 as compared with a configuration in which the driving force is increased at the second change rate in this case. Therefore, the speed accuracy of the vehicle 1 can be improved.

In addition, when the moving distance is less than the distance threshold, the guidance control part 148 reduces the braking force of the vehicle 1 at a third change rate in starting the vehicle 1. When the moving distance is equal to or greater than the distance threshold and the target speed is equal to or greater than the speed threshold, the guidance control part 148 reduces the braking force at a fourth change rate larger than the third change rate in starting the vehicle 1. When the moving distance is equal to or greater than the distance threshold and the target speed is less than the speed threshold, the guidance control part 148 reduces the braking force at the third change rate.

According to such a configuration, the guidance control part 148 reduces the braking force at the third change rate when the moving distance is equal to or greater than the distance threshold and the target speed is less than the speed threshold. Therefore, it is easier to control the speed of the vehicle as compared with a configuration in which the driving force is increased at the fourth change rate in this case. Therefore, the speed accuracy of the vehicle 1 can be improved.

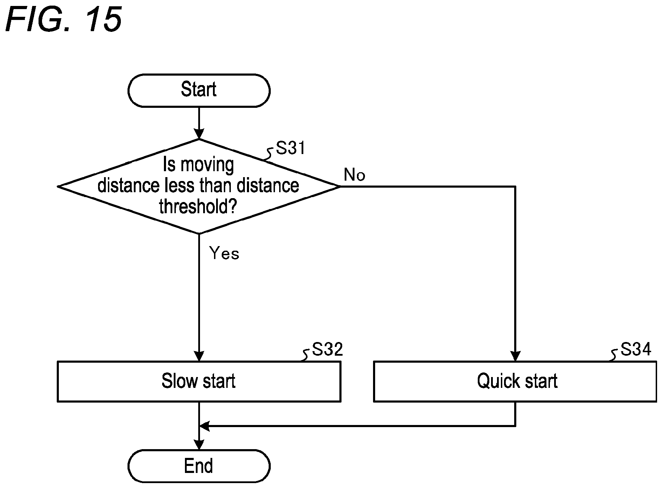

Note that the starting process is not limited to the example of FIG. 13. Here, FIG. 15 is a flowchart illustrating an example of a procedure of a starting process by a parking assistance device according to a first modification of the second embodiment. The example of FIG. 15 is different from the example of FIG. 13 in that S33 is not provided. In the example of FIG. 15, when the moving distance is not less than the distance threshold, that is, when the moving distance is equal to or greater than the distance threshold (S31: No), the guidance control part 148 quickly starts the vehicle 1 regardless of the target speed (S34). That is, in the present modification, the guidance control part 148 changes the acceleration only by the moving distance regardless of the target speed.

Although the embodiments of the present invention have been illustrated above, the above embodiments are merely examples, and are not intended to limit the scope of the invention. The embodiments can be implemented in various other forms, and various omissions, substitutions, combinations, or changes can be made without departing from the gist of the invention. In addition, the configuration and shape of each example can be partially interchanged and implemented. In addition, specifications (structure, type, direction, shape, size, length, width, height, number, arrangement, position, and the like) of each configuration, shape, and the like can be appropriately changed and implemented.

### REFERENCE SIGNS LIST

1: Vehicle, 14: ECU (Parking assistance device), 142: Obstacle detection part, 143: Parking lot detection part (Boundary detection part), 145: Target position determination part, 147: Route setting part, 148: Guidance control part, 150: Target speed setting part, Pa: Target position (Stopping position), Ps: Initial position (Starting position), Pt: Return position (Starting position, Stopping position), and R1, R2: Route (Movement route)

## Claims

1. A parking assistance device comprising:
a route setting part that sets a movement route of a vehicle; and
a control part that controls the vehicle by changing an acceleration depending on a distance between a starting position of the vehicle in the movement route and a stopping position of the vehicle in the movement route.

2. The parking assistance device according to claim 1, wherein
the control part performs braking control of the vehicle using a plurality of decelerations set to decrease as the distance between the starting position and the stopping position decreases.

3. The parking assistance device according to claim 2, wherein
the plurality of decelerations are a first deceleration when the distance is equal to or greater than a threshold, and a second deceleration when the distance is less than the threshold, the second deceleration being smaller than the first deceleration.

4. The parking assistance device according to claim 2, wherein
when the distance is less than the threshold, the control part starts a deceleration operation at a timing earlier than when the distance is equal to or greater than the threshold.

5. The parking assistance device according to claim 1, comprising a target speed setting part that sets a target speed between the starting position and the stopping position, wherein
the control part: increases, when the distance between the starting position and the stopping position is less than a distance threshold, a driving force of the vehicle at a first change rate in starting the vehicle; increases, when the distance is equal to or greater than the distance threshold and the target speed is equal to or greater than a speed threshold, the driving force at a second change rate larger than the first change rate in starting the vehicle; and increases, when the distance is equal to or greater than the distance threshold and the target speed is less than the speed threshold, the driving force at the first change rate.

6. The parking assistance device according to claim 5, wherein
the control part: reduces, when the distance is less than the distance threshold, a braking force of the vehicle at a third change rate in starting the vehicle; reduces, when the distance is equal to or greater than the distance threshold and the target speed is equal to or greater than the speed threshold, the braking force at a fourth change rate larger than the third change rate in starting the vehicle; and reduces, when the distance is equal to or greater than the distance threshold and the target speed is less than the speed threshold, the braking force at the third change rate.
